# EUROPEAN PATENT SPECIFICATION

(11) **EP 0 881 749 B1**
(45) Date of publication and mention of the grant of the patent: **27.10.2004**
(21) Application number: 98109569.8
(22) Date of filing: 26.05.1998
(51) Int. Cl.: H02K 3/24, H02K 9/06, H02K 3/12, H02K 3/28, H02K 19/22

(54) **Stator winding arrangement of alternator for vehicle**
Wicklungsanordnung eines Ständers eines Wechselstromgenerators für Fahrzeuge
Disposition d'enroulement de stator d'un alternateur pour véhicule

(30) Priority: 26.05.1997 WO PCT/JP97/01778; 22.09.1997 WO PCT/JP97/03374; 26.09.1997 JP 27975097; 26.09.1997 JP 27975197; 26.09.1997 JP 27975297; 14.10.1997 JP 29788297; 24.10.1997 JP 30973197; 10.12.1997 JP 36206397; 10.02.1998 JP 4439098; 13.02.1998 JP 4904098
(43) Date of publication of application: 02.12.1998
(60) Divisional application: 04014866.0
(73) Proprietor: Denso Corporation, Kariya-city, Aichi-pref., 448-8661 (JP)
(72) Inventor: Umeda, Atsushi, c/o Denso Corp. Intell. Prop. dept, Kariya-city, Aichi-pref. 448-8661 (JP); Shiga, Tsutomu, c/o Denso Corp. Intell. Prop. dept, Kariya-city, Aichi-pref. 448-8661 (JP); Kusase, Shin, c/o Denso Corp. Intell. Prop. dept., Kariya-city, Aichi-pref. 448-8661 (JP)
(74) Representative: Winter, Brandl, Fürniss, Hübner, Röss, Kaiser, Polte Partnerschaft

(56) References cited:
- WO-A-92/06527
- GB-A- 1 388 512
- JP-A- 6 121 497
- US-A- 1 822 261
- US-A- 1 826 295
- PATENT ABSTRACTS OF JAPAN vol. 010, no. 095 (E-395), 12 April 1986 -& JP 60 237831 A (NIPPON DENSO KK), 26 November 1985
- PATENT ABSTRACTS OF JAPAN vol. 005, no. 171 (E-080), 30 October 1981 -& JP 56 098358 A (NIPPON DENSO CO LTD), 7 August 1981

## Description

### BACKGROUND OF THE INVENTION

### 1. Field of the Invention

The present invention relates to an alternator driven by an engine which is mounted in a vehicle, a truck or a boat.

### 2. Description of the Related Art

As disclosed in JP-A-56-98358, a rotor has a mixed flow fan on one end thereof for sending cooling air in the axial direction to cool the inner periphery of a stator and the rotor.

Although the mixed flow fan of the structure disclosed in JP-A-56-98358 provides axially flowing air, the stator winding composed of the continuously wound wire has irregularly wavy surfaces which obstructs the air flow. Therefore, effective cooling cannot be attained.

WO92/06527 discloses a stator winding of an alternator for a vehicle. The stator winding is composed of a plurality of conductor segments, each of which can be disposed more regular than a stator winding composed of a continuously wound wire.

According to WO92/06527, although coil ends are arranged to be regular, the coil ends are not arranged to be suitable for axial flow of the cooling air. Therefore, the air flow along surfaces thereof is obstructed. Furthermore, according to W092/06527 cooling passages formed by inclined portions of an inner circumference do not have specific inclination with respect to a direction of rotation of a rotor.

An alternator for a vehicle according to the preamble of claim 1 is known from JP-A-06-121497.

### SUMMARY OF THE INVENTION

An object of the present invention is to provide effective axial cooling air flow.

Another object of the present invention is to provide an improved structure of coil ends of the stator and rotor which provides high cooling performance with low noises without addition of any parts.

In accordance with the present invention, these objects are solved by the alternator as defined in claim 1.

Further advantageous modifications of the present invention are subject matter of the dependent claims.

According to a main feature of the present invention, an alternator for a vehicle includes means for supplying cooling air along an inner circumference of coil-end groups in an axial direction, and the coil-end groups include a plurality of conductor segments each having an inner coil-end portion disposed at the inner circumference of the coil-end groups to extend from an end of the stator core and an outer coil-end portion disposed at an outer circumference of the coil-end groups to extend from an end of the stator core, and the inner coil-end portion extends in a direction between the axial direction and rotating direction of the rotor. For example, the inclined conductor segments extend in the direction 60° in angle from the axial direction of the cooling air and 30° in angle from the rotating direction. Both inclination angles for effective supply of the cooling medium are decided according to the ratio between the axial direction of the cooling medium and the rotating direction.

The cooling medium supplied by means for supplying cooling air and flowing in one way axial direction inside the coil ends is affected by the rotation of the rotor to contain the component of the rotating direction. Therefore, the cooling air is apt to flow in a spiral path.

### BRIEF DESCRIPTION OF THE DRAWINGS

Other objects, features and characteristics of the present invention as well as the functions of related parts of the present invention will become clear from a study of the following detailed description, the appended claims and the drawings. In the drawings:
Fig. 1 is a cross-sectional view of a main portion of an alternator for a vehicle according to a first embodiment of the present invention;
Fig. 2 is a outside view of a stator according to the first embodiment;
Fig. 3 is a perspective view of a conductor segment according to the first embodiment;
Fig. 4 is a fragmentary sectional view of the stator according to the first embodiment;
Fig. 5 is a perspective view of coil ends at opposite ends of the stator according to the first embodiment;
Fig. 6 is a winding diagram of a stator winding according to the first embodiment from first to the 48th slots;
Fig. 7 is a winding diagram of the stator according to the first embodiment from 49th to 96th slots;
Fig. 8 is a circuit diagram of the alternator according to the first embodiment;
Fig. 9 is a front view of a fan of a rotor according to the first embodiment;
Fig. 10 is a front view of the other fan of the rotor according to the first embodiment;
Fig. 11 is a fragmentary cross-sectional view of a stator according to another embodiment;
Fig. 12 is a fragmentary perspective view of the stator of another embodiment; and
Fig. 13 is a cross-sectional view of a main portion of an alternator for a vehicle according to another embodiment.

### DETAILED DESCRIPTION OF THE PREFERRED EMBODIMENTS

### (First Embodiment)

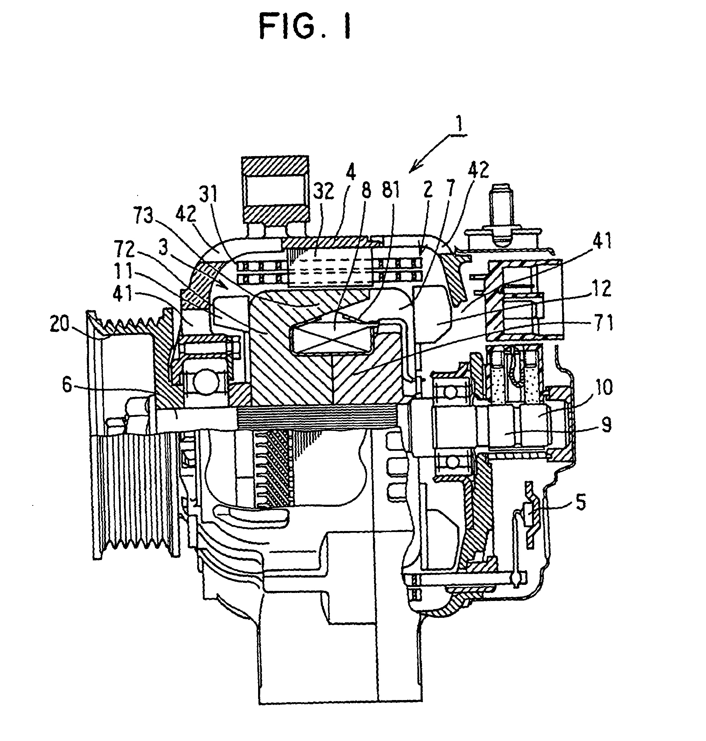

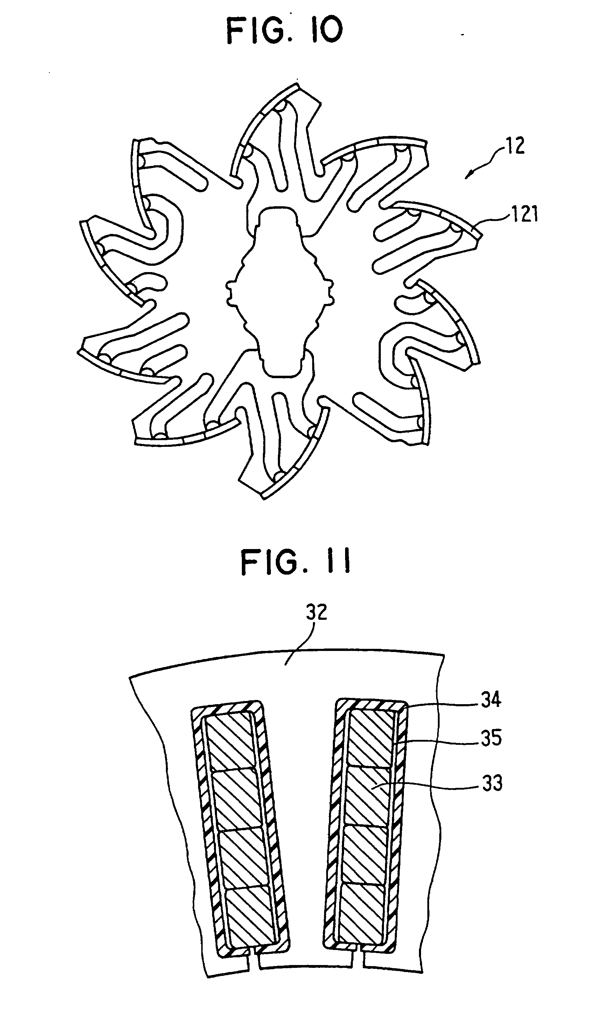

An alternator for a vehicle according to a first embodiment of the present invention is described with reference to Figs. 1-10.

Alternator 1 is composed of stator 2, rotor 3, frame 4 for supporting stator 2 and rotor 3 and rectifier 5 for converting as power to dc power. Rotor 3 rotates with shaft 6 and has Lundell type pole cores 7, field coil 8, slip rings 9, 10, mixed flow fan 11 and centrifugal fan 12. Shaft 6 is connected to pulley 20 which is driven by an engine (not shown) mounted on a vehicle.

Pole core 7 is composed of a pair of pole core members. Each of the pole core members is composed of boss portion 71 fitted to shaft 6, disk portion 72 extending radially from boss portion 71 and a plurality of claw poles 73. Field coil 8 is fitted to the inner periphery of claw poles 73 via insulation sheet 81. Insulation sheet 81 is composed of a sheet impregnated with insulation resin, which is heated and bonded to field coil 8 to insulate field coil 8 from pole core 7.

Frame 4 has air discharge windows 42 at portions opposite coil ends 31 of stator 2 and air intake windows 41 at the ends thereof. Stator 2 is composed of stator core 32, conductor segments 33 forming the stator winding and insulator 34 for insulating conductor segments 33 from stator core 32, and is supported by frame 4. Stator core 32 is composed of laminated steel sheets and has a plurality of slots 35 at the inner periphery thereof.

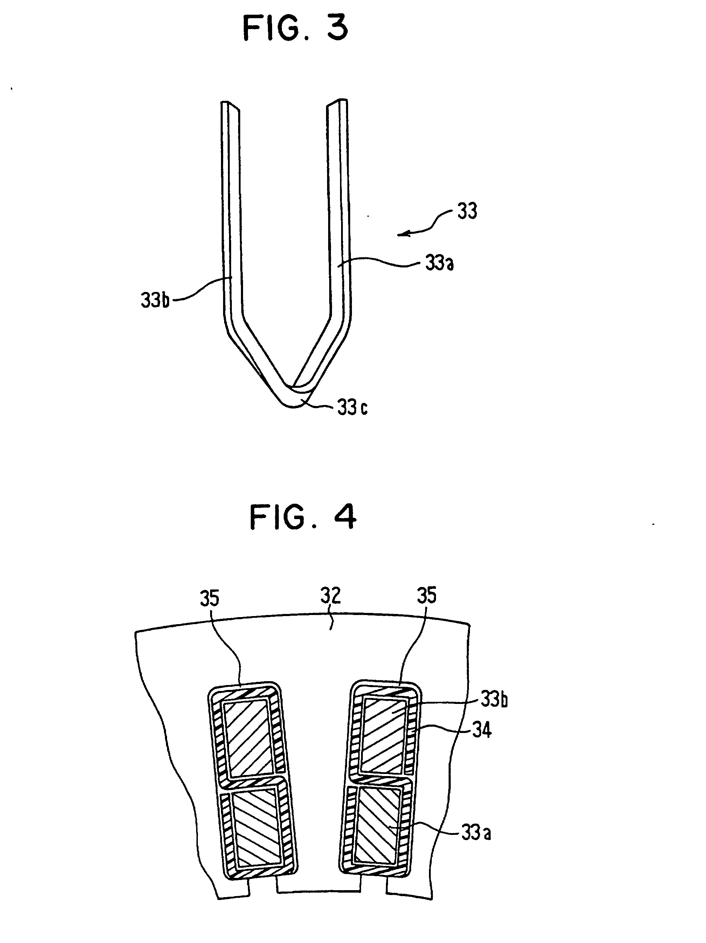

Two conductor segments 33 having rectangular cross-section are inserted into each of slots 35, and the stator winding is composed of a plurality of conductor segments 33, one of which is illustrated in Fig. 3, connected to one another. The shape of the cross-section of the conductor is a rectangle having the longer sides in the radial direction than the sides in the circumferential direction.

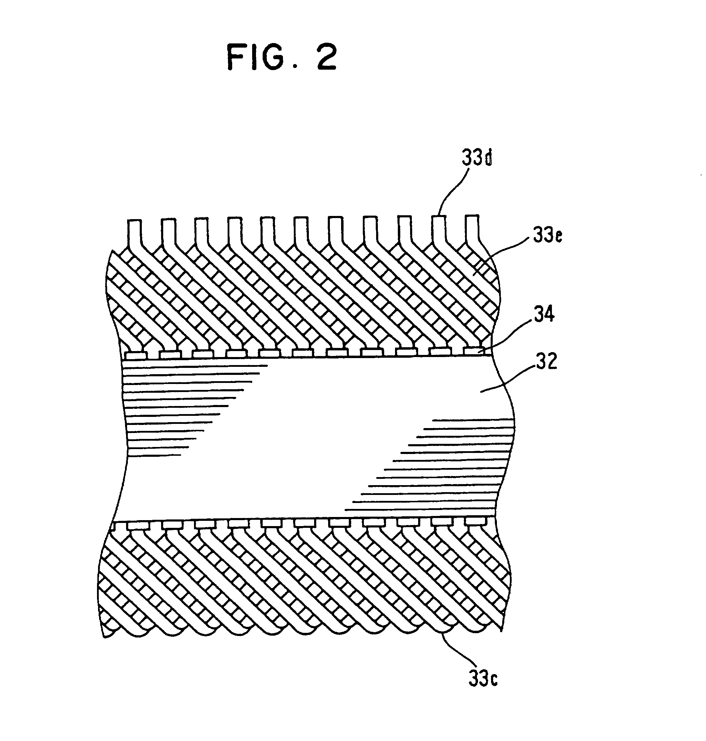

As shown in Fig. 2, U-turn portions 33c are disposed on one axial end of stator core 32, and joint portions 33d are disposed on the other end thereof. Inclined portions of the coil ends of conductor segments 33 in the outer layer are inclined oppositely to those in the inner layer. The inclination angle is the same in the same layer. Insulation coating is not always necessary for conductor segments 33.

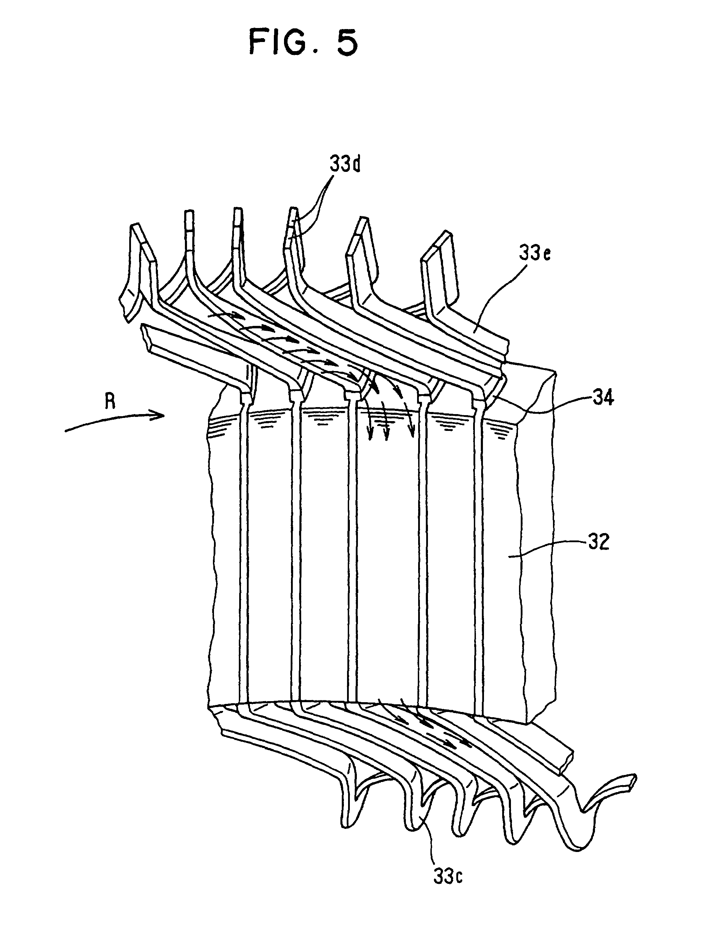

Manufacturing of the stator winding is as follows. Each of U-shaped conductor segments 33 is composed of conductor portion 33b to be disposed in the outer layer, conductor portion 33a to be disposed in the inner layer and U-turn portion 33c. U-shaped conductor segments 33 are placed so that U-turn portions 33c are disposed on the same axial end of stator core 32. As shown in Fig. 4, conductor portions 33b in the outer layer are inserted into the rear side of the slots, and conductor portions 33a in the inner layer are inserted into the front side of the slot. Each of conductor segment 33 is formed from a copper plate, which is bent and shaped into a U-shape by a press machine or the like. Each of the conductor portions is press-fitted between parallel side walls of the outer layer or inner layer of corresponding slots via insulator 34. As shown in Fig. 5, joint portions 33d formed opposite coil end 31 formed by U-turn portion 33c are bent outward in the circumference from each other.

In this embodiment, the rotor has 16 poles, and stator core 32 has 96 slots. Conductor segments 33 are connected to form a three-phase winding.

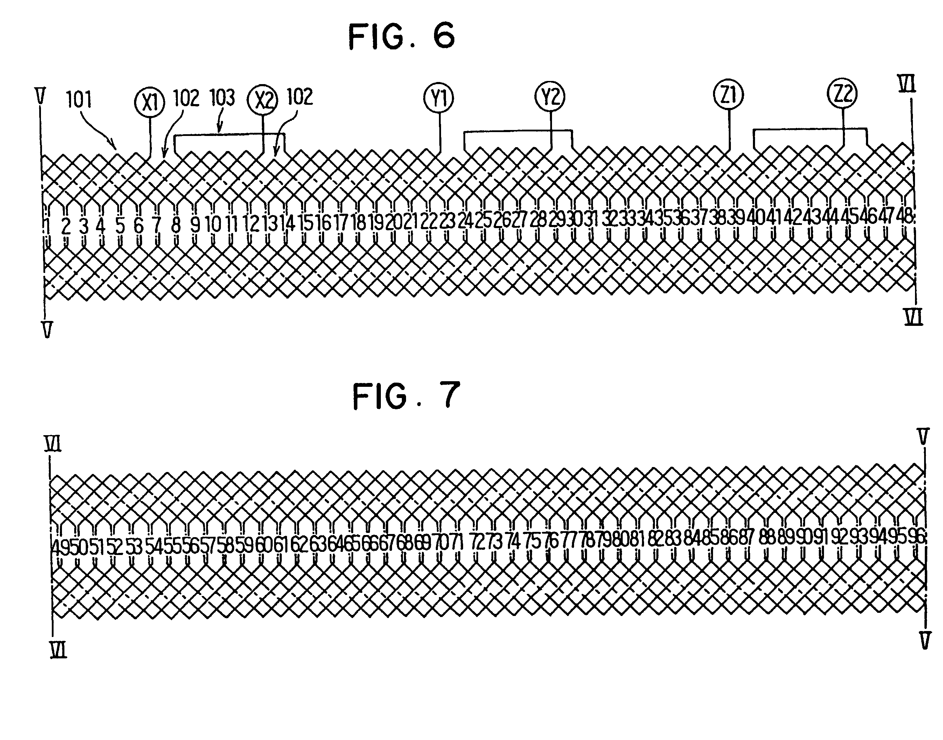

Figs. 6, 7 and 8 illustrate an example of the winding. Solid lines represent conductor segments 33 disposed in the outer layer, and one-dot chain lines represent conductor segments 33 disposed in the inner layer.

Firstly, an X-phase winding is described hereafter. The slots numbered with 4, 10, 16 and the every successive sixth slot to the slot numbered with 94 form a first slot group. The slots numbered with 5, 11, and 17 and the every successive sixth slot to the slot numbered with 95 form a second slot group. A first winding starting from terminal X1 is formed in the first slot group and connected in series to a second winding by one of joint portions 102 as shown in Fig. 6. The second winding is turned over by conductor portion 103 disposed in the same layer so that the conductor segments 33 of the same phase winding disposed in the same slot can be connected in series. The second winding is also connected in series with the first winding ending at terminal X2 by the other of joint portions 102.

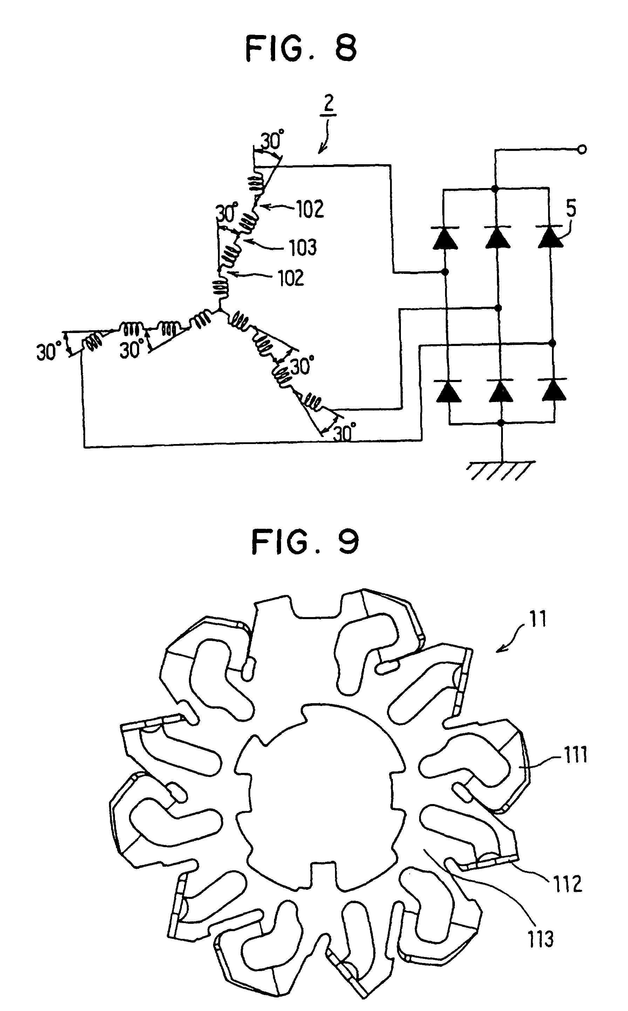

Thus, the X-phase winding is composed of a pair of series-connected stator windings whose phase angle are 30° in electric-angle different from each other. Y-phase and Z-phase windings are also composed of stator windings in the same manner and disposed, respectively, in the stator core at 120° pitch in electric angle, thereby forming a three-phase star winding shown in Fig. 8.

Pulley-side cooling fan 11 has a plurality of blades 111 slanting to base plate 113 and a plurality of blades 112 perpendicular to base plate 113 as shown in Fig. 9. A plurality of blades 111 are slanted at an acute angle to base plate 112 against the rotating direction R. Base plate 113 is welded to the end surface of pole core 7 to be rotatable with rotor 3. Counter-pulley-side cooling fan 12 has a plurality of perpendicular blades 121 and no other blades.

Fig. 5 is a perspective view illustrating inclined conductor segments 33 of coil ends 31 disposed on the inner circumference and the rotating direction R of rotor 3. Viewing from the side of pulley 20, rotor 3 rotates clockwise.

With the above-described structure, inclined portions 33e of coil ends 31 incline in the same direction in the same layer, so that a plurality of the stator windings can be disposed without interference with one another. Accordingly, regular continuous patterns are formed in inner circumference of the coil ends 31 instead of substantially uneven portions. Because the conductor segments 33 on the inner circumference of coil ends 31 incline in the same direction at opposite ends of stator core 32, cooling air flows along the same direction. Therefore, it is possible to reduce noise generated when the cooling air sent from cooling fans 11, 12 blows on the inner circumference of the coil-ends.

As shown in Fig. 5, an annularly-disposed conductor segments 33 of the inner circumference of coil ends 31 incline along the cooling air flow in the forward rotating direction R of rotor 3. The cooling air, which is driven by fan 11 to flow along the inner circumference of coil ends 31 in one-way axial direction, is drawn by the rotation of rotor 3 to include a component of the rotating direction R. Thus, the cooling air flows in a spiral or whirl.

In other words, the inclined portions of coil ends 31 guide the cooling air to flow in the axial direction more effectively as indicated by arrows in Fig. 5.

Because rotor 3 is provided with spaces between contiguous adjacent two of the pole cores, field coil 8 can be cooled by the axially flowing cooling air. Forward direction defined here is a direction between the direction of the cooling air flowing in the axial direction and rotating direction R of rotor 3.

Cooling fan 11 on the side of pulley 20 has a plurality of slanted blades 111. When rotor 3 rotates in direction R in Fig. 9, blades 111 drive the cooling air in the axial direction. Thus, the strong cooling air in the rotating direction can be supplied along the inner circumference of coil ends 31 without obstructing the air flow in the axial direction. As a result, the cooling air in the axial direction is increased to raise the cooling effect and the output power.

The cooling air is taken in from the side of the pulley 20 where ambient temperature is lower, and the temperature of the axial flow can be lowered so that field coil 8 can be cooled effectively.

The number of slots is six times as many as the number of the poles of rotor 3, and the conductor segments 33 in the adjacent slots 35 are connected in series.

The following structure is available instead of the above-described structure. It is preferable that each coil end is spaced apart from each other, and that the cooling-air passages are formed in the radial direction to be transverse to the coil-end groups. However, the coil ends can be coated with resin to close gaps between the coil ends as far as there are convex-concave patterns due to the inclined portions of the conductor segments 33 inside the coil ends

Two coil ends 31 are formed from joint portions 33d if S-shaped segments 33, each of which corresponds to a half portion of the U-shaped segment shown in Fig. 3, are used instead of U-shaped segment. The joint portions of the two segments 33 are substituted for U-turn portion 33c.

It is possible to insert two or more conductor segments 33 in each of slots 35. In other words, four or more conductor segments 33 can be inserted into each of slots 35 to increase the number of turns of the stator winding.

### (Second Embodiment)

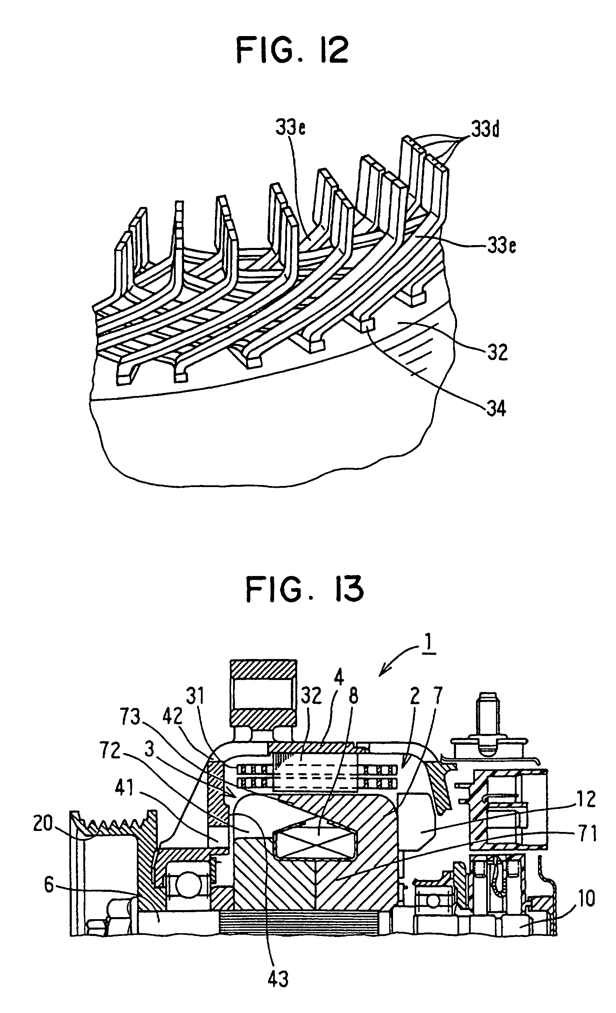

An alternator according to a second embodiment is described with reference to Figs. 11-13.

As shown in Fig. 11, four conductor segments 33 are inserted into each of slots 35 to align in the radial direction. Conductor segments 33 covered with insulation coating are inserted, and an insulation sheet is disposed between a bundle of conductor segments 33 and the wall of slot 35. Joint portions of this structure are shown in Fig. 12. Each of four conductor segments 33 in each slot 35 extends oppositely from each other in the circumferential direction. The joint portions 33d of conductor segments 33 in one slot are connected to the joint portions 33d of connectors in other slots. As shown in Fig. 12, the innermost conductor segments 33 are connected to the conductor segments 33 in the second layer, and the conductor segments 33 in the third layer are connected to the conductor segments 33 in the outermost circumference of the coil-end groups. Accordingly, a plurality of joint portions 33d are disposed annularly in two layers, inner layer and outer layer. In other words, a plurality of joint portions 33d are spaced apart from one another in both circumferential direction and radial direction. In this structure, the incline direction of the conductor segments 33, rotating direction R of rotor 3 and axial component of the cooling air flow in the coil-end groups are arranged so that the conductor segments 33 in the innermost circumference of the coil-end groups can be inclined in the forward direction with respect to the axial direction and the rotating direction R.

In addition to the conductor segments 33 of the innermost circumference, the conductor segments 33 of the circumference second therefrom can be inclined in the forward direction with respect to the axial direction and the rotating direction R.

The conductor segments 33 can also be disposed in the circumference direction . For example, four conductor segments 33 can be disposed squarely, and bare conductor segments 33, conductor segments 33 having square or elliptic cross-section can also be used. In order to let the cooling air to flow easily, it is preferable to select the shape of the cross-section of the conductor segments 33 and disposition thereof in the inner circumference of the coil-end groups. For example, the conductor segments 33 are selected to have grooves having sufficient depth and width on the inner circumference of the coil-end groups.

In this embodiment, cooling fans 11, 12 are disposed on the opposite sides of rotor 3. However, such fans can be omitted if temperature rise is not so high. In this case, the side walls of the disk portions 72 of pole core 7 function as centrifugal fan blades so that the centrifugal cooling air can be modified to axial cooling air by the inclined portions of the conductor segments 33 of the inner circumference of the coil ends.

As shown in Fig. 13, the pulley-side end of rotor without fan 11 can be disposed close to the pulley-side inner wall 43 of frame 4 around intake windows 41. Thus, inner wall 43 functions as a fan shroud to increase the fan effect of the disk portions 72 of the pole core, thereby increasing the axial air flow. Thus, the cooling effect of the field coil can be increased without increasing the number of parts and work time.

If the ambient temperature around the pulley 20 is comparatively high, cooling fan 12 disposed at the side opposite pulley 20 can be provided with fan blades for driving cooling air axially inside and also inclined portions of the conductor segments 33 of the inner circumference of coil ends 31 can be extended in the opposite direction. Thus, the structure can be applied so that the cooling air is taken from the side where the ambient temperature is comparatively low according to the circumstances. That is, the rotating direction R of rotor 3 and incline direction of the coil ends are selected to supply the cooling air from the side where the ambient temperature is comparatively low. Thus, temperature of the axial cooling air flow can be lowered to cool magnetic field coil 8 effectively.

In the foregoing description of the present invention, the invention has been disclosed with reference to specific embodiments thereof. It will, however, be evident that various modifications and changes may be made to the specific embodiments of the present invention without departing from the broader scope of the invention as set forth in the appended claims. Accordingly, the description of the present invention in this document is to be regarded in an illustrative, rather than restrictive, sense.

## Claims

1. Alternator for a vehicle, comprising:
a stator (2) having a stator core (32) and a stator winding that extends from opposite ends of said stator core (32), wherein
said stator core (32) comprises a plurality of slots (35),
said stator winding is composed of a plurality of conductor segments (33), each of which comprises conductor portions (33a, 33b) disposed in respective ones of said slots (35) and extending from opposite ends of said stator core (32), and
a plurality of said conductor portions (33a) are disposed at an inner circumference of said stator winding and another plurality of said conductor portions (33b) are disposed at an outer circumference of said stator winding; and
a rotor (3) disposed opposite said stator (2); and
means (11, 12) for supplying cooling substance along an inner circumference of said stator winding in a given axial direction,
***characterized in that***:
said plurality of said conductor portions (33a) disposed at the inner circumference of said stator winding and extending from one end of said stator core (32) extend in a direction between said given axial direction and the direction (R) of rotor rotation thereby forming cooling passages along said plurality of said conductor portions (33a) disposed at the inner circumference of said stator winding and extending from the one end of said stator core (32) and the cross section of each of said conductor portions (33a) has a rectangular shape, longer sides of which being arranged in a radial direction of said stator core (32).

2. Alternator as claimed in claim 1, ***characterized in that*** said means (11, 12) for supplying cooling substance supplies said cooling substance to both said plurality of said conductor portions (33a) disposed at the inner circumference of said stator winding and the inner circumference of said stator core (32).

3. Alternator as claimed in claim 1, ***characterized in that*** said means (11) for supplying cooling substance has a plurality of blades disposed at an end of said rotor (3) radially inside the respective coil ends.

4. Alternator as claimed in any of the preceding claims, ***characterized in that*** said plurality of said conductor portions (33a) disposed at the inner circumference of said stator winding and extending from the other end of said stator core (32) opposite to the one end extend in the direction between said given axial direction and the direction (R) of rotor rotation.

5. Alternator as claimed in any of the preceding claims, ***characterized in that*** shorter sides of said rectangular shape of said cross section of each of said conductor portions (33a) are arranged in a circumferential direction of said stator core (32).

6. Alternator as claimed in any of the preceding claims, ***characterized in that*** one of said conductor portions (33a, 33b) is disposed in each of said slots (35).

7. Alternator as claimed in claim 1, wherein:
said conductor portions (33a, 33b) are disposed in inner and outer layers in said slots respectively;
each of said plurality of conductor portions (33a) disposed at said inner circumference of said stator winding is connected to a respective one of said plurality of conductor portions (33b) disposed at said outer circumference of said stator winding; and
each of said plurality of conductor portions (33a) disposed at said inner circumference of said stator winding is disposed in said inner layer of one of said slots and its respective one of said plurality of conductor portions (33b) disposed at said outer circumference of said stator winding is disposed in said outer layer of another of said slots (35).

8. Alternator as claimed in any of the preceding claims, ***characterized in that***:
said rotor (3) is a magnetic field rotor (3) having a pole core (7) and a field coil (8); and
said Stator (2) includes a multi-phase stator winding disposed in said slots (35).

9. Alternator as claimed in any of the preceding claims, ***characterized in that*** said means for supplying cooling substance comprises cooling fans (11, 12) having a plurality of fan blades (111, 112) respectively disposed on opposite ends of said rotor (3).

10. Alternator as claimed in claim 9, ***characterized in that*** a plurality (111) of said fan blades (111, 112) of one of said cooling fans (11, 12) are inclined at an acute angle to the axis of said rotor (3) to drive cooling air in both axial and radial directions.

11. Alternator as claimed in claim 9 or 10 ***characterized in that*** it further comprises a pulley (20) for rotating said rotor (3), said 'pulley (20) being disposed on the same side as said one of said cooling fans (11, 12).

12. Alternator as claimed in claim 9 or 10, ***characterized in that*** it further comprises a pulley (20) for rotating said rotor (3), said pulley (20) being disposed on the opposite side of said one of said cooling fans (11, 12).

13. Alternator as claimed in any of the preceding claims, ***characterized in that***:
each conductor segment consists of a pair of said conductor portions (33a, 33b);
said conductor portions (33a, 33b) are disposed in said slots (35) in annular layers around the axis (6) of said rotor (3); and
respective conductor portions (33a, 33b) of each pair of said conductor portions (33a, 33b) are disposed in adjacent ones of said annular layers and in different slots (35).

14. Alternator as claimed in claim 13, ***characterized in that*** said respective conductor portions (33a, 33b) of each pair of said conductor portions (33a, 33b) are connected via a U-turn portion (33c).

15. Alternator as claimed in claim 13, ***characterized in that***:
each pair of said conductor portions (33a, 33b) is connected, via respective joint portions (33d) thereof, to a conductor portion (33a, 33b) belonging to another pair of said conductor portions (33a, 33b) and disposed in an adjacent one of said annular layers, thus forming a plurality of joint portions (33d); and
said joint portions (33d) are disposed spaced and apart from each other in the circumferential direction.

16. Alternator as claimed in claim 15, ***characterized in that***:
said conductor portions (33a, 33b) are disposed in two annular layers in said slots (35); and
said joint portions (33d) are disposed in a single annular configuration around said axis (6).

17. Alternator as claimed in claim 15, ***characterized in that***:
said conductor portions (33a, 33b) are disposed in four or more annular layers in said slots (35); and
said joint portions (33d) are disposed in two or more radially spaced annular configurations around said axis (6).

18. Alternator as claimed in any of the preceding claims, ***characterized in that***:
a pair of said conductor portions (33a, 33b) is disposed in inner and outer layers in said slots (35),
said slots (35) are disposed at 30° in electric angle and grouped into first and second slot groups (35) next to each other,
portions of said conductor portions (33a, 33b) in said first slot group composed of slots (35) spaced apart one slot pitch with each other are connected in series to form a first series-connected group,
other portions of said conductor portions (33a, 33b) in said second slot group are connected in series to form a second series-connected group, and
a first phase winding is composed of said first and second series-connected groups connected in series to each other.

## Patentansprüche

1. Wechselstromgenerator für ein Fahrzeug, der aufweist:
einen Ständer (2), der einen Ständerkern (32) und eine Ständerwicklung aufweist, die sich von gegenüberliegenden Enden des Ständerkerns (32) ausdehnt, wobei
der Ständerkern (32) eine Mehrzahl von Schlitzen (35) aufweist,
die Ständerwicklung aus einer Mehrzahl von Leitersegmenten (33) besteht, von denen jeder Leiterabschnitte (33a, 33b) aufweist, die in jeweiligen der Schlitze (35) angeordnet sind und sich von gegenüberliegenden Seiten des Ständerkerns (32) ausdehnen, und
eine Mehrzahl der Leiterabschnitte (33a) an einem Innenumfang der Ständerwicklung angeordnet sind und eine andere Mehrzahl der Leiterabschnitte (33b) an einem Außenumfang der Ständerwicklung angeordnet ist; und
einen Läufer (3), der dem Ständer (2) gegenüberliegend angeordnet ist; und
eine Einrichtung (11, 12) zum Zuführen einer Kühlsubstanz entlang eines Innenumfangs der Ständerwicklung in einer gegebenen axialen Richtung,
**dadurch gekennzeichnet, dass**
die Mehrzahl der Leiterabschnitte (33a). die an dem Innenumfang der Ständerwicklung angeordnet sind und sich von einem Ende des Ständerkerns (32) ausdehnen, in einer Richtung zwischen der gegebenen axialen Richtung und der Richtung (R) der Läuferdrehung ausdehnen, um dadurch Kühldurchlässe entlang der Mehrzahl der Leiterabschnitte (33a) auszubilden, die an dem Innenumfang der Ständerwicklung angeordnet sind und sich von dem einen Ende des Ständerkerns (32) ausdehnen und der Querschnitt von jedem der Leiterabschnitte (33a) eine rechteckige Form aufweist, von der längere Seiten in einer Radialrichtung des Ständerkerns (32) angeordnet sind.

2. Wechselstromgenerator nach Anspruch 1, **dadurch gekennzeichnet, dass** die Einrichtung (11, 12) zum Zuführen der Kühlsubstanz die Kühlsubstanz zu beiden der Mehrzahl von Leiterabschnitten (33a) zuführt, die an dem Innenumfang der Ständerwicklung und dem Innenumfang des Ständerkerns (32) angeordnet sind.

3. Wechselstromgenerator nach Anspruch 1, **dadurch gekennzeichnet, dass** die Einrichtung (11) zum Zuführen der Kühlsubstanz eine Mehrzahl von Klingen aufweist, die an einem Ende des Läufers (3) radial innerhalb der jeweiligen Spulenenden angeordnet sind.

4. Wechselstromgenerator nach einem der vorhergehenden Ansprüche, **dadurch gekennzeichnet, dass** die Mehrzahl der Leiterabschnitte (33a), die an dem Innenumfang der Ständerwicklung angeordnet sind und sich von dem anderen Ende des Ständerkerns (32) ausdehnen, das zu dem einen Ende gegenüberliegend ist, in der Richtung zwischen der gegebenen Axialrichtung und der Richtung (R) der Läuferdrehung ausdehnen.

5. Wechselstromgenerator nach einem der vorhergehenden Ansprüche, **dadurch gekennzeichnet, dass** kürzere Seiten der Rechtecksform des Querschnitts von jedem der Leiterabschnitte (33a) in einer Umfangsrichtung des Ständerkerns (32) angeordnet sind.

6. Wechselstromgenerator nach einem der vorhergehenden Ansprüche, **dadurch gekennzeichnet, dass** einer der Leiterabschnitte (33a, 33b) in jedem der Schlitze (35) angeordnet ist.

7. Wechselstromgenerator nach Anspruch 1, wobei:
die Leiterabschnitte (33a, 33b) in inneren bzw. äußeren Schichten in den Schlitzen angeordnet sind;
jeder der Mehrzahl von Leiterabschnitten (33a), der an dem Innenumfang der Ständerwicklung angeordnet ist, mit einem jeweiligen der Mehrzahl von Leiterabschnitten (33b) verbunden ist, die an dem Außenumfang der Ständerwicklung angeordnet sind; und
jeder der Mehrzahl von Leiterabschnitten (33a), die an dem Innenumfang der Ständerwicklung angeordnet sind, in der Innenschicht von einem der Schlitze angeordnet ist und sein jeweiliger einer der Mehrzahl von Leiterabschnitten (33b), der an dem Außenumfang der Ständerwicklung angeordnet ist, in der Außenschicht von einem anderen der Schlitze (35) angeordnet ist.

8. Wechselstromgenerator nach einem der vorhergehenden Ansprüche, **dadurch gekennzeichnet, dass**:
der Läufer (3) ein Magnetfeldläufer (3) ist, der einen Polkern (7) und eine Feldspule (8) aufweist; und
der Ständer (2) eine mehrphasige Ständerwicklung aufweist, die in den Schlitzen (35) angeordnet ist.

9. Wechselstromgenerator nach einem der vorhergehenden Ansprüche, **dadurch gekennzeichnet, dass** die Einrichtung zum Zuführen der Kühlsubstanz Kühllüfter (11, 12) aufweist, die eine Mehrzahl von Lüfterklingen (111, 112) aufweisen, die jeweils auf gegenüberliegenden Enden des Läufers (3) angeordnet sind.

10. Wechselstromgenerator nach Anspruch 9, **dadurch gekennzeichnet, dass** eine Mehrzahl (111) der Lüfterklingen (111, 112) von einem der Kühllüfter (11, 12) in einem spitzen Winkel zu der Achse des Läufers (3) geneigt ist, um Kühlluft in sowohl axiale als auch radiale Richtungen zu drükken.

11. Wechselstromgenerator nach Anspruch 9 oder 10, **dadurch gekennzeichnet, dass** er weiterhin eine Rolle (20) zum Drehen des Läufers (3) aufweist, wobei die Rolle (20) auf der gleichen Seite wie der einen der Kühllüfter (11, 12) angeordnet ist.

12. Wechselstromgenerator nach Anspruch 9 oder 10, **dadurch gekennzeichnet, dass** er weiterhin eine Rolle (20) zum Drehen des Läufers (3) aufweist, wobei die Rolle (20) auf der gegenüberliegenden Seite der einen der Kühllüfter (11, 12) angeordnet ist.

13. Wechselstromgenerator nach einem der vorhergehenden Ansprüche, **dadurch gekennzeichnet, dass**:
jedes Leitersegment ein Paar der Leiterabschnitte (33a, 33b) aufweist;
die Leiterabschnitte (33a, 33b) in den Schlitzen (35) in ringförmigen Schichten um die Achse (6) des Läufers (3) angeordnet sind; und
jeweilige Leiterabschnitte (33a, 33b) von jedem Paar der Leiterabschnitte (33a, 33b) in angrenzenden der ringförmigen Schichten und in unterschiedlichen Schlitzen (35) angeordnet sind.

14. Wechselstromgenerator nach Anspruch 13, **dadurch gekennzeichnet, dass** die jeweiligen Leiterabschnitte (33a, 33b) von jedem Paar der Leiterabschnitte (33a, 33b) über einen Kehrtwendungsabschnitt (33c) verbunden sind.

15. Wechselstromgenerator nach Anspruch 13, **dadurch gekennzeichnet, dass**:
jedes Paar der Leiterabschnitte (33a, 33b) über jeweilige Verbindungsabschnitte (33d) von diesen mit einem Leiterabschnitt (33a, 33b) verbunden ist, der zu einem anderen Paar der Leiterabschnitte (33a, 33b) gehört und in einer angrenzenden der ringförmigen Schichten angeordnet ist, um dadurch eine Mehrzahl von Verbindungsabschnitten (33d) auszubilden; und
die Verbindungsabschnitte (33d) voneinander beabstandet und getrennt in der Umfangsrichtung angeordnet sind.

16. Wechselstromgenerator nach Anspruch 15, **dadurch gekennzeichnet, dass**:
die Verbindungsabschnitte (33a, 33b) in zwei ringförmigen Schichten in den Schlitzen (35) angeordnet sind; und
die Verbindungsabschnitte (33d) in einem einzigen ringförmigen Aufbau um die Achse (6) angeordnet sind.

17. Wechselstromgenerator nach Anspruch 15, **dadurch gekennzeichnet, dass**:
die Verbindungsabschnitte (33a, 33b) in vier oder mehr ringförmigen Schichten in den Schlitzen (35) angeordnet sind; und
die Verbindungsabschnitte (33d) in zwei oder mehr radial beabstandeten ringförmigen Aufbauten um die Achse (6) angeordnet sind.

18. Wechselstromgenerator nach einem der vorhergehenden Ansprüche, **dadurch gekennzeichnet, dass**:
ein Paar der Verbindungsabschnitte (33a, 33b) in inneren und äußeren Schichten in den Schlitzen (35) angeordnet ist,
die Schlitze (35) in einem elektrischen Winkel von 30° angeordnet sind und in erste und zweite Schlitzgruppen (35), die sich am nächsten zueinander befinden, gruppiert sind,
Abschnitte der Verbindungsabschnitte (33a, 33b) in der ersten Schlitzgruppe, die aus Schlitzen (35) besteht, die eine Schlitzbreite voneinander beabstandet sind, in Reihe geschaltet sind, um eine erste in Reihe geschaltete Gruppe auszubilden,
andere Abschnitte der Verbindungsabschnitte (33a, 33b) in der zweiten Schlitzgruppe in Reihe geschaltet sind, um eine zweite in Reihe geschaltete Gruppe auszubilden, und
eine erste Phasenwicklung aus den ersten und zweiten in Reihe geschalteten Gruppen besteht, die zueinander in Reihe geschaltet sind.

## Revendications

1. Alternateur pour véhicule, comprenant :
un stator (2) ayant un noyau de stator (32) et un enroulement de stator qui se prolonge depuis des côtés opposés dudit noyau de stator (32), dans lequel
ledit noyau de stator (32) comprend une pluralité d'encoches (35).
ledit enroulement de stator comprend une pluralité de segments de conducteur (33), dont chacun comprend des parties de conducteur (33a, 33b) placées dans des encoches respectives parmi lesdites encoches (35) et se prolongeant depuis des côtés opposés dudit noyau de stator (32),
une pluralité desdites parties de conducteur (33a) est placée à une circonférence intérieure dudit enroulement de stator tandis qu'une autre pluralité desdites parties de conducteur (33b) est placée à une circonférence extérieure dudit enroulement de stator ;
un rotor (3) placé en face dudit stator (2) ; et
un moyen (11, 12) pour alimenter une substance de refroidissement le long d'une circonférence intérieure dudit enroulement de stator dans une direction axiale donnée,
***caractérisé en* ce que** :
ladite pluralité desdites parties de conducteur (33a) placée à la circonférence intérieure dudit enroulement de stator et se prolongeant depuis une extrémité donnée dudit noyau de stator (32) se prolonge dans une direction entre ladite direction axiale donnée et la direction (R) de rotation du rotor, formant de ce fait des passages de refroidissement le long de ladite pluralité desdites parties de conducteur (33a) placées à la circonférence intérieure dudit enroulement de stator et se prolongeant depuis ladite extrémité donnée dudit noyau de stator (32) et la section transversale de chacune desdites parties de conducteur (33a) a une forme rectangulaire, dont les côtés longs sont disposés dans une direction radiale dudit noyau de stator (32).

2. Alternateur selon la revendication 1, ***caractérisé en* ce que** ledit moyen (11, 12) servant à alimenter la substance de refroidissement fournit ladite substance de refroidissement à ladite pluralité desdites parties de conducteur (33a) placées à la circonférence intérieure dudit enroulement de stator et à la circonférence intérieure dudit noyau de stator (32).

3. Alternateur selon la revendication 1, ***caractérisé en* ce que** ledit moyen (11) servant à alimenter la substance de refroidissement (11) a une pluralité de lames placées à une extrémité dudit rotor (3) radialement à l'intérieur des extrémités de bobine respectives.

4. Alternateur selon l'une quelconque des revendications précédentes, ***caractérisé en* ce que** ladite pluralité desdites parties de conducteur (33a) placées à la circonférence intérieure dudit enroulement de stator et se prolongeant depuis l'autre extrémité dudit noyau de stator (32) située en face de l'extrémité donnée se prolonge dans la direction entre ladite direction axiale donnée et la direction (R) de rotation du rotor.

5. Alternateur selon l'une quelconque des revendications précédentes, ***caractérisé en* ce que** les côtés courts de ladite forme rectangulaire de ladite section transversale de chacune desdites parties de conducteur (33a) sont disposés dans une direction circonférentielle dudit noyau de stator (32).

6. Alternateur selon l'une quelconque des revendications précédentes, ***caractérisé en* ce que** l'une desdites parties de conducteur (33a, 33b) est placée dans chacune desdites encoches (35).

7. Alternateur selon la revendication 1, dans lequel :
lesdites parties de conducteur (33a, 33b) sont respectivement placées dans des couches intérieure et extérieure dans lesdites encoches ;
chacune de ladite pluralité de parties de conducteur (33a) placées à ladite circonférence intérieure dudit enroulement de stator est reliée à celle respective parmi ladite pluralité de parties de conducteur (33b) placées à ladite circonférence extérieure dudit enroulement de stator ; et
chacune de ladite pluralité de parties de conducteur (33a) placées à ladite circonférence intérieure dudit enroulement de stator est placée dans ladite couche intérieure de l'une desdites encoches, tandis que sa partie de conducteur respective parmi la pluralité de parties de conducteur (33b) placées à ladite circonférence extérieure dudit enroulement de stator est placée dans ladite couche extérieure d'une autre desdites encoches (35).

8. Alternateur selon l'une quelconque des revendications précédentes, ***caractérisé en* ce que** :
ledit rotor (3) est un rotor à champ magnétique (3) ayant un noyau magnétique (7) et une bobine de champ (8) ; et
ledit stator (2) comporte un enroulement de stator polyphasé placé dans lesdites encoches (35).

9. Alternateur selon l'une quelconque des revendications précédentes, ***caractérisé en* ce que** :
ledit moyen pour alimenter une substance de refroidissement comprend des ventilateurs de refroidissement (11, 12) ayant une pluralité de pales de ventilateur (111, 112) disposés respectivement à des extrémités opposées dudit rotor (3).

10. Alternateur selon la revendication 9, ***caractérisé en* ce qu'**une pluralité (111) desdites pales de ventilateur (111, 112) de l'un desdits ventilateurs de refroidissement (11, 12) sont inclinées à un angle aigu par rapport à l'axe dudit rotor (3) afin d'entraîner l'air de refroidissement dans les directions tant axiale que radiale.

11. Alternateur selon la revendication 9 ou 10 ***caractérisé en* ce qu'**il comprend en outre une poulie (20) pour mettre en rotation ledit rotor (3), ladite poulie (20) étant placée sur le même côté que ledit un desdits ventilateurs de refroidissement (11, 12).

12. Alternateur selon la revendication 9 ou 10, ***caractérisé en* ce qu'**il comprend en outre une poulie (20) pour mettre en rotation ledit rotor (3), ladite poulie (20) étant placée sur le côté opposé dudit un desdits ventilateurs de refroidissement (11, 12).

13. Alternateur selon l'une quelconque des revendications précédentes, ***caractérisé* en ce que** :
chaque segment de conducteur consiste en une paire desdites parties de conducteur (33a, 33b) ;
lesdites parties de conducteur (33a ; 33b) sont placées dans lesdites encoches (35) dans des couches annulaires autour de l'axe (6) dudit rotor (3) ; et
des parties de conducteur respectives (33a, 33b) de chaque paire desdites parties de conducteur (33a, 33b) sont placées dans celles adjacentes parmi lesdites couches annulaires et dans des encoches (35) différentes.

14. Alternateur selon la revendication 13, ***caractérisé en* ce que** lesdites parties de conducteur respectives (33a, 33b) de chaque paire de parties de conducteur (33a, 33b) sont reliées par le truchement d'une partie de demi-tour (33c).

15. Alternateur selon la revendication 13, ***caractérisé en* ce que** :
chaque paire desdites parties de conducteur (33a, 33b) est reliée, par le truchement de parties de jointure respectives (33d) de celles-ci, à une partie de conducteur (33a, 33b) appartenant à une autre paire desdites parties de conducteur (33a, 33b) et placée dans une couche annulaire adjacente parmi lesdites couches annulaires, formant ainsi une pluralité de parties de jointure (33d) ; et
lesdites parties de jointure (33d) sont placées, espacées l'une de l'autre, dans la direction circonférentielle.

16. Alternateur selon la revendication 15, ***caractérisé en* ce que** :
lesdites parties de conducteur (33a, 33b) sont placées dans deux couches annulaires dans lesdites encoches (35) ; et
lesdites parties de jointure (33d) sont placées dans une seule configuration annulaire autour dudit axe (6).

17. Alternateur selon la revendication 15, ***caractérisé* en ce que** :
lesdites parties de conducteur (33a, 33b) sont placées dans quatre, ou plus, couches annulaires dans lesdites encoches (35) ; et
lesdites parties de jointure (33d) sont placées dans deux, ou plus, configurations annulaires, radialement espacées, autour dudit axe (6).

18. Alternateur selon l'une quelconque des revendications précédentes, ***caractérisé en* ce que** :
une paire desdites parties de conducteur (33a, 33b) est placée dans des couches intérieure et extérieure dans lesdites encoches (35),
lesdites encoches (35) sont placées à 30° d'angle électrique et groupées en des premier et second groupes d'encoches (35) à proximité l'un de l'autre,
des parties desdites parties de conducteur (33a, 33b) dans ledit premier groupe d'encoches composé d'encoches (35) espacées l'une de l'autre d'un pas d'encoche sont reliées en série pour former un premier groupe connecté en série,
d'autres parties desdites parties de conducteur (33a, 33b) dans ledit second groupe d'encoches sont reliées en série pour former un second groupe connecté en série, et
un premier enroulement de phase est composé desdits premier et second groupes connectés en série reliés en série l'un à l'autre.
